# DEMANDE DE BREVET EUROPEEN

(11) **EP 1 829 499 A1**
(43) Date de publication de la demande: **05.09.2007**
(21) Numéro de dépôt: 07300842.7
(22) Date de dépôt: 01.03.2007
(51) Int. Cl.: A61C 13/30

(54) **Tenon dentaire radio-opaque et procédé de fabrication**

(30) Priorité: 02.03.2006 FR 0650732
(71) Demandeur: Société de Recherches Techniques Dentaires - R.T.D., 38120 Saint Egrève (FR)
(72) Inventeur: Reynaud, Pierre-Luc, 38410, Vaulnaveys le Haut (FR); Chu, Manh-Quynh, 38120, Fontanil Cornillon (FR); Sanchette, Frédéric, 38620, Montferrat (FR); Bedel, Laurent, 38950, Quaix en Chartreuse (FR)
(74) Mandataire: Denjean, Eric

(57) **Abrégé**

Tenon dentaire en matériau composite comprenant une âme centrale constituée d'une matrice de résine dans laquelle sont noyées des fibres, ladite âme étant entourée d'une gaine, caractérisé en ce que la gaine est exempte de fibres et contient au moins une substance susceptible de rendre le tenon radio-opaque.

## Description

L'invention a pour objet un nouveau tenon dentaire susceptible d'être radio-opaque présentant des propriétés d'adhésion aux ciments composites, améliorées. Elle a également pour objet un procédé de fabrication dudit tenon.

Les tenons dentaires sont utilisés pour la reconstitution de dents dépulpées. On distingue deux types de tenons, respectivement les tenons métalliques ou céramiques et les tenons composites.

Les tenons métalliques sont en général réalisés en acier inoxydable. Ils ont pour principaux inconvénients d'être sujets à des phénomènes de corrosion. En outre, ils présentent un module d'élasticité transversal différent de celui de la dentine pour conduire à termes, à une désolidarisation du tenon.

Pour résoudre ces problèmes, on a proposé des tenons fabriqués en matériaux composites tels que ceux décrits notamment dans le document EP-A-432 001. Ces tenons sont en pratique constitués de fibres longues de verre ou de carbone, et plus généralement de toute matière présentant des caractéristiques mécaniques élevées, les fibres étant noyées, par technique de pultrusion notamment, dans une matrice de résine thermodurcissable. De manière générale, la proportion de fibres longues représente de 50 à 70% en volume du tenon, le complément à 100% étant occupé par la matrice. Toutefois, l'inconvénient de ces tenons est qu'ils ne sont pas radio-opaques.

Or, il est nécessaire pour le chirurgien, de pouvoir visualiser le tenon au moment de sa mise en place ou lors d'une intervention post-opératoire, par radiographie aux rayons X. Pour rendre les matériaux composites radio-opaques, plusieurs solutions ont été proposées. L'une d'entre-elles consiste à incorporer des oxydes métalliques radio-opaques dans la matrice de résine et/ou dans les fibres de renforcement. Cette technique est par exemple décrite dans le document EP-A-793 474. Généralement, la proportion d'oxyde métallique dans la matrice peut aller jusqu'à 50% en poids, alors qu'elle est de l'ordre de 10 à 30% dans les fibres, en fonction de la nature de l'oxyde métallique mis en oeuvre. Une telle solution n'est pas optimale en termes de propriétés mécaniques et d'intensité radiographique. En effet, les oxydes métalliques, lorsqu'ils sont introduits dans la matrice, ont tendance à former des agglomérats, ce qui conduit à rompre la cohésion entre les fibres et la matrice de résine. Il s'ensuit une perte des performances mécaniques.
A titre d'exemple, la contrainte à la rupture en flexion trois points, d'un profilé exempt d'oxyde métallique et contenant 64% en volume de fibres de quartz unidirectionnelles est de l'ordre de 1600-1800 MPa. Le même profilé contenant 40% en poids d'oxyde métallique dans la matrice, soit 10% en poids du matériau, présente une rupture en flexion égale à 1100 MPa. De telles performances mécaniques sont donc incompatibles avec l'utilisation de tenons de faibles diamètres ou présentant des rétentions sur leur surface.

Un autre inconvénient réside dans la transparence des tenons puisque cette transparence est affectée par la présence des oxydes métalliques. Il s'ensuit une diminution de la transmission des rayonnements lumineux issus de la lampe utilisée pour photopolymériser l'adhésif.

Par ailleurs, la radio-opacité obtenue s'avère insuffisante de par la faible teneur d'oxyde métallique. Si certes, le niveau de radio-opacité est augmenté en introduisant des oxydes métalliques à la fois dans la matrice et dans les fibres, ce n'est pas sans influencer les propriétés mécaniques du tenon.

On a proposé dans le document WO 96/26686, de gainer un tenon composite non radio-opaque d'une gaine radio-opaque, la gaine étant constituée d'au moins une, avantageusement deux couches de fibres radio-opaques, telles que par exemple des fibres de verre contenant de l'oxyde de calcium. Si cette solution permet la visualisation du contour du tenon et améliore les caractéristiques mécaniques du fait de la présence de fibres, le taux de radio-opacité reste insuffisant en raison de la faible densité radiographique. En outre, la mise en place de la gaine par pultrusion s'avère être une opération délicate et l'obtention d'une couche régulière est particulièrement difficile.

Par ailleurs et de manière connue, les tenons composites sont collés et scellés dans les racines au moment de leur mise en place par le chirurgien dentiste, au moyen de ciment composite. Or, il s'avère que ce collage est particulièrement difficile à réaliser, eu égard à la nature du matériau composite. Pour résoudre ce problème, le chirurgien-dentiste a l'obligation, avant le collage, d'appliquer extemporanément à la surface des tenons, un primer d'adhésion ou une couche de silane, destiné à améliorer la liaison avec le ciment composite. Une telle étape est contraignante pour le chirurgien. En outre, on constate que la silanisation effectuée sur les tenons n'est pas satisfaisante en ce qu'elle ne permet pas une adhésion optimale du ciment composite.

En d'autres termes, le problème que se propose de résoudre l'invention est de développer un tenon en matériau composite, qui soit susceptible d'être radio opaque sans toutefois affecter ses caractéristiques mécaniques et sa transparence et dont la capacité d'adhésion aux ciments composites soit améliorée.

Pour ce faire, le Demandeur a constaté que la mise en oeuvre, en lieu et place de la gaine à base de fibres radio-opaques, d'une couche à base de substance radio-opaque permettait de résoudre concomitamment les problèmes évoqués ci-dessus. S'agissant en particulier de l'amélioration de la capacité d'adhésion, le Demandeur émet l'hypothèse que la présence d'une gaine inorganique autour du tenon permet de créer des liaisons avec le silane sur toute la surface du tenon ce qui n'est pas le cas des tenons de l'art antérieur où la liaison s'effectue sur la seule partie de la surface au niveau de laquelle sont situées les fibres de renfort inorganiques. La présence de silane réparti de manière homogène et régulière sur toute la surface du tenon permet ainsi de créer une jonction entre le ciment composite et le tenon.

En d'autres termes, l'invention a pour objet un tenon dentaire en matériau composite comprenant une âme centrale constituée d'une matrice de résine dans laquelle sont noyées des fibres, ladite âme étant entourée d'une gaine. Ce tenon se caractérise en ce que la gaine est exempte de fibres et contient au moins une substance susceptible de rendre ledit tenon radio-opaque, ladite substance permettant en outre d'améliorer l'adhésion au ciment composite après silanisation.

Bien entendu, l'intensité radiographique sera dépendante de la quantité de substance appliquée à la surface du tenon. En pratique, ladite substance conférant la radio-opacité et permettant d'améliorer l'adhésion au ciment composite après silanisation, représente de 0.5% à 30% en poids du tenon.

La substance peut être appliquée en une ou plusieurs couches, avantageusement en une couche unique, par la technique de dépôt en phase vapeur dite "PVD" (Physical Vapor Deposition), la technique "EBPVD" (Electron Beam Physical Vapor Déposition) ou par la technique "CVD" (Chemical Vapor Déposition), ou encore par technique magnétron (pulvérisation cathodique magnétron).

La gaine peut contenir une proportion variable de ladite substance pouvant aller de 5 à 100% en poids, avantageusement, au moins 90% en poids le complément à 100% étant constitué d'impuretés dont la présence est liée aux procédé d'application de la couche, en particulier par PVD. Du niveau de radio-opacité souhaité dépendra l'épaisseur de ladite gaine. En pratique, l'épaisseur de la gaine est comprise entre 0,1 et 60 µm, avantageusement entre 0.5 et 30 µm. Dans toute la gamme, on note la possibilité d'effectuer une silanisation régulière permettant d'améliorer l'adhésion au ciment composite, même si l'objectif reste d'avoir la plus faible épaisseur possible de gaine.

Parmi les substances susceptibles de conférer la radio-opacité, on peut utiliser certains oxydes métalliques, certains composés fluorés et carbonates.

Parmi les oxydes métalliques, on peut citer notamment les oxydes d'aluminium (Al₂O₃), de baryum (BaO), de strontium (SrO), de tungstène (WO₃), de zinc (ZnO) et de zirconium (ZrO).

Parmi les composés fluorés, on cite notamment l'ytterbium (YbF₃) et l'Yttrium (YF3).

Parmi les carbonates, on peut utiliser notamment le carbonate de lantanium (La₂(CO₃)₃) ou le carbonate de zirconium (ZrCO₃).

Bien entendu, l'ensemble des substances peuvent être utilisées seules ou en mélange.

Dans un mode de réalisation préféré, le tenon est recouvert d'une gaine constituée d'oxyde métallique, avantageusement d'oxyde de zirconium, la gaine ayant une épaisseur comprise entre 0,2 et 2 µm, avantageusement environ 1 µm.

Pour améliorer encore la radio-opacité, une ou plusieurs substances susceptibles de conférer la radio-opacité peuvent être également introduites dans la matrice et/ou dans les fibres, tout en tenant compte des contraintes techniques évoquées précédemment. En particulier, on peut utiliser en tant que fibres, des fibres AR comprenant 18-19% en poids de zircone. Dans ce cas, les fibres représentent de 50 à 70% en poids du tenon, tandis que la matrice représente 30 à 50% en poids du tenon, gaine exceptée.

Selon une autre caractéristique, l'étape de silanisation permettant d'améliorer le collage du tenon dans la racine peut être effectuée au moment de la fabrication ou ultérieurement, par le chirurgien dentiste, au moment de la mise en place du tenon.

Dans un mode de réalisation particulier, la gaine contient donc en outre au moins un silane. En pratique, les silanes sont choisis dans le groupe comprenant 3-(Triméthoxysilyl)propyl méthacrylate, vinyltriméthoxysilane, 3-(Glycidyloxy)propyl triméthoxysilane et 3-(Triméthoxysilyl)propyl méthacrylate.

L'invention a également pour objet un procédé pour la fabrication du tenon précédemment décrit.

Selon ce procédé :
- on fabrique un tenon en matériau composite comprenant une âme centrale constituée de fibres noyées dans une matrice de résine,
- on dépose à la surface dudit tenon au moins une couche contenant au moins une substance susceptible de rendre le tenon radio-opaque,.

La fabrication du tenon se fait par toute technique connue de l'homme du métier, en particulier par technique de pultrusion suivie d'un usinage du jonc obtenu.

Selon une autre caractéristique, la couche de substance radio-opaque est déposée, comme déjà dit, par PVD, EBPVD, Magnétron (pulvérisation cathodique magnétron) ou CVD.

Dans un mode de réalisation particulier, le tenon de l'invention est silanisé après application de la substance radio opaque.

En pratique, le silane est déposé par trempage du tenon dans une solution de silane. Ce trempage peut être effectué au moment de la fabrication du tenon ou par le chirurgien, de manière extemporanée.

L'invention et les avantages qui en découlent ressortiront mieux des exemples de réalisation suivants.

### Exemple 1

Les tenons sont constitués de fibres de verre E représentant un volume de 63%. Les fibres sont enrobées par une matrice de résine méthacrylique à base de monomères BISGMA (Bisphénol A Glycidyl Diméthacrylate), 1,4 Butanediol Dimethacrylate et 1,6 HDDMA Hexane Diol Dimethacrylate. La matrice représente 37% volume et elle ne contient pas de charges radio-opaques. Le diamètre du tenon est de 1.8mm.

### 1^{ère} étape : Dépôt d'une couche d'oxyde de zirconium sur la surface des tenons dentaires.

Les tenons sont insérés dans un support métallique, la pointe vers le haut. Les dépôts à base d'oxyde de zirconium sont réalisés par la technique EBPVD (Electron Beam Physical Vapor Deposition) à partir d'une source d'oxyde de zirconium yttriée (ZrO₂-Y₂O₃ 8% molaire). Les tenons fixés sur un support métallique sont positionnés à 29 cm au-dessus de la source d'évaporation. Avant dépôt, un vide de 4.10⁻³ Pa est réalisé dans le réacteur. Un débit de 4 sccm d'oxygène est introduit pendant l'étape de dépôt. L'évaporation de la source par faisceau d'électron est réalisée avec une tension de 8,6 kV sous un vide de 10⁻¹ Pa.

La couche d'oxyde de zirconium recouvre toute la surface des tenons, excepté une longueur de 2 à 3 mm que le praticien découpera lors de la mise en place. L'épaisseur de dépôt obtenue est de l'ordre de 30µm en moyenne et n'a aucune influence sur les caractéristiques dimensionnelles du tenon puisqu'il a été tenu compte de l'épaisseur de la couche lors de l'usinage des tenons.

Une telle épaisseur permet d'obtenir une intensité radiographique équivalente à 1.3mm d'Aluminium.

### 2^{è} étape : silanisation

### Préparation de la solution

Solution éthanol contenant environ 10% d'eau acidifiée acide acétique
MEMO : 3-(Triméthoxysilyl)propyl méthacrylate 5% en poids
Mélanger pendant 30 minutes au moins

Les tenons sont ensuite trempés dans cette solution contenant du silane MEMO pendant 15 minutes. Ils sont ensuite séchés dans une étuve pour évaporer le solvant et l'eau. Le silane ainsi déposé forme une liaison chimique entre la couche externe du tenon et le ciment composite. Des éléments libres tels des groupements OH vont pouvoir créer des pontages chimiques entre l'adhésif et le tenon via sa couche externe.

Les résultats de collage obtenus à partir des tenons fabriqués selon cet exemple ont été améliorés : 32 MPa au lieu de 26.9 MPa avec un adhésif et 32 MPa au lieu de 23 MPa sans adhésif.

En outre, le protocole de collage ou scellement a été réduit d'une étape. En effet il n'est plus nécessaire d'appliquer une couche d'adhésif sur le tenon puis de le photopolymériser.

### Exemple 2

Les tenons sont constitués de fibres de verre AR représentant un volume de 60%. Les fibres sont enrobées par une matrice de résine époxyde à base de Bisphénol A. La matrice représente 40% volume et elle ne contient pas de charges radio-opaques.
Les tenons ont un diamètre égal à 1.8mm.

### 1^{ère} étape : Dépôt d'une couche d'oxyde de zirconium sur la surface des tenons dentaires.

Les tenons sont traités dans les conditions opératoires identiques à celles décrites dans l'exemple précédent.

La couche d'oxyde de zirconium recouvre toute la surface des tenons, excepté une longueur de 2 à 3 mm que le praticien découpera lors de la mise en place. L'épaisseur de dépôt obtenue est de l'ordre de 2 µm en moyenne et n'a aucune influence sur les caractéristiques dimensionnelles du tenon. L'espace prévu pour le collage et le scellement est d'au moins 20 µm au rayon.

Les résultats de collage obtenus à partir des tenons fabriqués selon cet exemple ont été améliorés : 33.7 MPa au lieu de 26.9 MPa avec un adhésif et 33.7 MPa au lieu de 23 MPa sans adhésif. Le protocole de collage ou scellement a été réduit d'une étape.

Il est à noter que la valeur du collage sur des tenons identiques sans la couche d'oxyde de zirconium mais avec du silane MEMO seul est de 29 MPa ±5 MPa. Bien que cette couche d'oxyde de zirconium soit d'épaisseur faible, elle a permis d'obtenir des valeurs d'adhésion plus stables et constantes (33.7 MPa ± 3 MPa avec la couche d'oxyde de zirconium).

### Exemple 3

Les tenons sont constitués de fibres de verre E représentant un volume de 57%. Les fibres sont enrobées par une matrice de résine époxyde à base de Bisphénol A.

La matrice représente 43% volume et elle contient de charges radio-opaques sous forme de particules de verre au strontium et zirconium diamètre moyen 1µm dans une proportion de 30% en poids par rapport à la matrice.

Les tenons ont un diamètre égal à 1.8mm et présentent à leur surface une couche d'alumine et de zircone.

Le dépôt de zircone ou d'alumine s'effectue par la technique dite CVD (Chemical Vapor Déposition). Dans ce cas, une solution de zirconate comme par exemple tetrapropyl zirconate ou zirconium propoxide à 70% dans le propanol est injectée comme précurseur dans le gaz plasma. L'oxyde de zirconium se condense sur les tenons.

Après dépôt d'oxyde de zirconium par CVD (plasma), les tenons sont soumis à un cycle de traitement pour activer la surface et enlever toutes traces éventuelles d'autres éléments indésirables. Ce traitement s'effectue en utilisant un mélange de H₂/N₂.

Après le dépôt d'oxyde de zirconium par CVD, les tenons sont silanisés comme dans les exemples précédents.

Les résultats de collage obtenus à partir des tenons fabriqués selon cet exemple ont été améliorés : 33.5 MPa au lieu de 26.9 MPa avec un adhésif et 33.5 MPa au lieu de 23 MPa sans adhésif. Le protocole de collage ou scellement a été réduit d'une étape.
L'écart type obtenu est de 33.5 MPa ± 3 MPa.

## Revendications

1. Tenon dentaire en matériau composite comprenant une âme centrale constituée d'une matrice de résine dans laquelle sont noyées des fibres, ladite âme étant entourée d'une gaine, **caractérisé en ce que** la gaine est exempte de fibres et contient au moins une substance susceptible de rendre le tenon radio-opaque.

2. Tenon selon la revendication 1, **caractérisé en ce que** la substance présente dans la gaine représente entre 0.5% et 30% en poids du tenon.

3. Tenon selon l'une des revendications 1 ou 2, **caractérisé en ce que** la gaine contient de 5 à 100% en poids de ladite substance.

4. Tenon selon l'une des revendications précédentes, **caractérisé en ce que** l'épaisseur de la gaine est comprise entre 0,1 µm et 60 µm, avantageusement entre 0,5 µm et 30 µm.

5. Tenon selon l'une des revendications précédentes, **caractérisé en ce que** ladite substance est choisie dans le groupe comprenant l'oxyde d'aluminium, l'oxyde de baryum, l'oxyde de strontium, l'oxyde de tungstène, l'oxyde de zinc, l'oxyde de zirconium, l'ytterbium, l'yttrium, le carbonate de lanthanium et le carbonate de zirconium.

6. Tenon selon l'une des revendications précédentes, **caractérisé en ce que** la gaine contient en outre au moins un silane.

7. Tenon selon la revendication 6, **caractérisé en ce que** le silane est choisi dans le groupe comprenant 3-(Triméthoxysilyl)propyl méthacrylate, vinyltriméthoxysilane, 3-(Glycidyloxy)propyl triméthoxysilane et 3-(Triméthoxysilyl)propyl méthacrylate.

8. Tenon selon l'une des revendications précédentes, **caractérisé en ce que** les fibres sont des fibres radio-opaques, avantageusement des fibres de verre AR.

9. Tenon selon l'une des revendications précédentes, **caractérisé en ce que** la matrice contient en outre au moins une substance susceptible de conférer la radio opacité.

10. Procédé pour la fabrication d'un tenon dentaire en matériau composite, **caractérisé en ce que** :
- on fabrique un tenon comprenant des fibres noyées dans une matrice de résine,
- on dépose sur la surface du tenon ainsi obtenu, au moins une couche contenant au moins une substance susceptible de rendre le tenon radio-opaque.

11. Procédé selon la revendication 11, **caractérisé en ce que** ladite substance est déposée par une technique de dépôt en phase vapeur, ou par EBPVD, ou par la technique Magnétron.

12. Procédé selon la revendication 11, **caractérisé en ce que** ladite substance est choisie dans le groupe comprenant l'oxyde d'aluminium, l'oxyde de baryum, l'oxyde de strontium, l'oxyde de tungstène, l'oxyde de zinc, l'oxyde de zirconium, l'ytterbium, l'yttrium, le carbonate de lanthanium et le carbonate de zirconium.

13. Procédé selon l'une des revendications 10 à 12, **caractérisé en ce que** une fois la couche contenant au moins une substance susceptible de rendre le tenon radio-opaque appliquée, on silanise le tenon
